**Europäisches Patentamt**

**European Patent Office**

**Office européen des brevets**

(19)

(11) Numéro de publication: **0 287 464**
**B1**

(12)          **FASCICULE DE BREVET EUROPEEN**

(45) Date de publication du fascicule du brevet:
03.01.90

(51) Int. Cl.⁴: **B60S 1/38**

(21) Numéro de dépôt: **88400893.9**

(22) Date de dépôt: **13.04.88**

(54) **Déflecteur aerodynamique pour balai d'essuie-glace et balai d'essuie-glace équipé d'un tel déflecteur.**

(30) Priorité: **17.04.87 FR 8705481**

(43) Date de publication de la demande:
**19.10.88 Bulletin 88/42**

(45) Mention de la délivrance du brevet:
**03.01.90 Bulletin 90/1**

(84) Etats contractants désignés:
**BE DE ES FR GB IT**

(56) Documents cités:
**DE-A- 3 343 318**
**FR-A- 1 410 083**
**FR-A- 2 109 141**
**FR-A- 2 556 297**

(73) Titulaire: **PAUL JOURNEE S.A., 39, Avenue Marceau, F-92400 Courbevoie(FR)**

(72) Inventeur: **Journée, Maurice, le Bois Hédouin Reilly, F-60240 Chaumont en Vexin(FR)**

(74) Mandataire: **Lemaire, Marc, VALEO Département Propriété Industrielle 30, rue Blanqui, F-93406 Saint-Ouen(FR)**

## Description

L'invention concerne un déflecteur aérodynamique pour balai d'essuie-glace ainsi qu'un balai d'essuie-glace équipé d'un tel déflecteur.

Compte tenu de la vitesse croissante des véhicules automobiles, il est demandé aux balais d'essuie-glace de fonctionner efficacement à des vitesses de plus en plus élevées. Une limitation importante à des vitesses élevées est la résistance aérodynamique du balai qui tend à se soulever à haute vitesse et à perdre son efficacité d'essuyage.

Pour pallier cet inconvénient, on a proposé de munir le balai de déflecteurs aérodynamiques (DE-A-23 46 100, DE-A14 30 589, FR-A-25 52 384, FR-A-25 51 405, FR-A-25 50 744, DE-A-31 39 444).

Ces diverses propositions ont donné naissance à des balais d'essuie-glace très divers qui résolvent plus ou moins bien le problème des vitesses élevées mais entraînent en général une grande complication du balai et de son outillage de fabrication, ainsi qu'un aspect esthétique souvent médiocre.

La présente invention vise à obtenir un déflecteur extrèmement efficace, très esthétique, tout en étant économique à fabriquer et à assembler.

A cet effet, le déflecteur selon l'invention est caractérisé par le fait qu'il comprend un corps allongé formé de deux zones à pentes transversales différentes s'étendant axialement l'une après l'autre sur la longueur dudit corps.

De préférence, chaque patte de montage du déflecteur, destinée à être logée à l'intérieur d'un pont de balai d'essuie-glace, comporte un doigt pénétrant dans une découpure du pont correspondant et écrasée après montage.

L'invention sera bien comprise à la lecture de la description suivante faite en se référant au dessin annexé dans lequel:

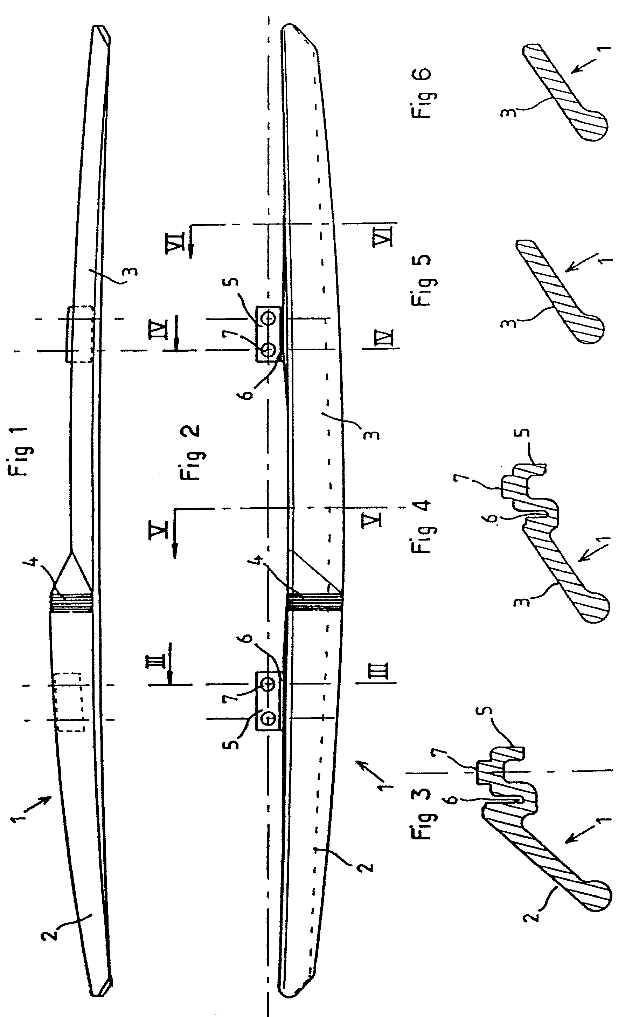

- la figure 1 est une vue en élévation latérale d'un déflecteur selon un exemple de réalisation de l'invention,
- la figure 2 est une vue en plan du déflecteur de la figure 1,
- les figures 3 à 6 sont respectivement des vues en coupe selon les lignes III-III, IV-IV, V-V et VI-VI de la figure 2.
- la figure 7 est une vue en élévation latérale d'un déflecteur selon un second exemple de réalisation de l'invention,
- la figure 8 est une vue en plan du déflecteur de la figure 1,
- les figures 9 et 10 sont respectivement des vues en coupe selon les lignes IX-IX et X-X de la figure 8.

Le déflecteur est constitué d'un corps 1 comprenant une zone 2 fortement inclinée raccordée à une zone 3 moins inclinée par une zone de liaison 4. Ces zones 2 et 3 à pentes transversales différentes, s'étendent axialement l'une après l'autre sur la longueur du déflecteur.

Lorsque l'on accroche le balai, muni d'un tel déflecteur, sur le porte-balai monté sur le véhicule autour de son axe de rotation, on positionne la zone 3 moins inclinée du côté dudit axe de rotation; la zone 2 fortement inclinée est alors vers l'extérieur dans la zone ayant le plus grand rayon d'action.

Par ces inclinaisons différentes, qui peuvent d'ailleurs varier progressivement à l'intérieur de chaque zone, on assure un placage très efficace du balai sur le pare-brise à toutes les vitesses du véhicule et/ou du balai.

Le déflecteur porte deux pattes de fixation 5 reliées au corps 1 par des creusures 6, de sorte que les pattes sont glissées à l'intérieur d'un pont de balai d'essuie-glace (non représenté) à section en U renversé, sans gêner l'aérodynamisme. Les pattes 5 portent des tétons 7 qui pénètrent dans des ouvertures des ponts et sont fixées par tout moyen tel que déformation à chaud, soudure par ultrasons ou clipsage.

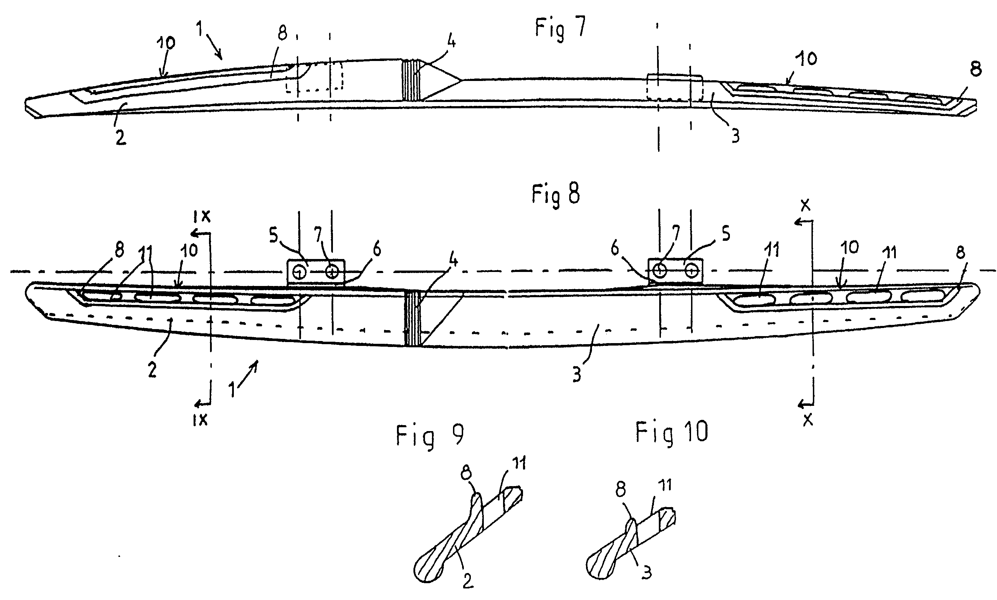

Suivant la variante de réalisation des figures 7 à 10, on a prévu une discontinuité à proximité du bord de fuite afin d'améliorer encore l'effet de placage du balai sur le parebrise par l'action de l'air. Ces discontinuités sont créées par des parois 8 saillantes s'étendant à distance de la bordure 9 du déflecteur destinée à être positionnée contre le balai au montage.

Les parois 8 sont, à chacune de leurs extrémités, raccordées à ladite bordure 9 afin de délimiter des zones 10 de dépression.

Des ouvertures 11 sont également prévues dans ces zones 10 afin de favoriser l'écoulement de l'air et donc d'éviter d'éventuelles surpressions sous le déflecteur.

## Revendications

1.- Déflecteur aérodynamique pour balai d'essuie-glace, caractérisé en ce qu'il comprend un corps allongé (1) formé de deux zones (2,3) à pentes transversales différentes, s'étendant axialement l'une après l'autre sur la longueur dudit corps (1).

2.- Déflecteur selon la revendication 1, caractérisé en ce que ledit corps (1) porte au moins deux pattes de montage (5) destinées à être logées à l'intérieur d'un pont de balai d'essuie-glace

3.- Déflecteur selon la revendication 2, caractérisé par le fait que chaque patte (5) comporte au moins un doigt (7) pénétrant dans une découpure du pont correspondant.

4.- Déflecteur selon l'une des revendications précédentes, caractérisé en ce que des discontinuités formées par des parois (8) saillantes sont prévues à proximité du bord de fuite.

5.- Déflecteur selon la revendication 4, caractérisé en ce que les parois (8) s'étendent à distance de la bordure (9) du déflecteur et sont raccordées à cette bordure (9) à chacune de leurs extrémités.

6.- Déflecteur selon la revendication 5, caractérisé en ce que des ouvertures (11) sont prévues entre les parois (8) et la bordure (9)

7.- Balai d'essuie-glace, caractérisé par le fait qu'il comporte un déflecteur selon l'une des revendications 1 à 6.

**Patentansprüche**

1. Aerodynamische Windschaufel für ein Scheibenwischerblatt, dadurch gekennzeichnet, daß sie einen länglichen Körper (1) umfaßt, der aus zwei Zonen (2, 3) mit unterschiedlichen Querneigungen besteht, die sich in axialer Richtung hintereinander über die Länge des genannten Körpers (1) erstrecken.

2. Windschaufel nach Anspruch 1, dadurch gekennzeichnet, daß der genannte Körper (1) wenigstens zwei Montagelaschen (5) aufweist, die dazu bestimmt sind, in den Steg eines Scheibenwischerblattes eingesetzt zu werden.

3. Windschaufel nach Anspruch 2, dadurch gekennzeichnet, daß jede Lasche (5) wenigstens einen Finger (7) aufweist, der in einen Ausschnitt im entsprechenden Steg eingreift.

4. Windschaufel nach einem der vorherigen Ansprüche, dadurchgekennzeichnet, daß in Nähe der Austrittskante Unterbrechungen vorgesehen sind, die aus vorstehenden Wänden (8) bestehen.

5. Windschaufel nach Anspruch 4, daduch gekennzeichnet, daß die Wände (8) in einem Abstand von der Einfassung (9) der Windschaufel verlaufen und an jedem Ende mit dieser Einfassung (9) verbunden sind.

6. Windschaufel nach Anspruch 5, daduch gekennzeichnet, daß zwischen den Wänden (8) und Einfassung (9) Öffungen (11) vorgesehen sind.

7. Scheibenwischerblatt, dadurch gekennzeichnet, daß es eine Windschaufel nach einem der Ansprüche 1 bis 6 enthält.

**Claims**

1. An aerodynamic deflector for a windscreen wiper blade, characterised in that it comprises an elongated body (1) formed with two zones (2, 3) having different transverse slopes and extending axially one after the other along the length of the said body (1).

2. A deflector according to Claim 1, characterised in that the said body (1) carries at least two mounting tabs (5) adapted to be mounted within the support bar of a windscreen wiper blade.

3. A deflector according to Claim 2, characterised by the fact that each tab (5) comprises at least one finger (7) extending into an opening in the corresponding support bar.

4. A deflector according to one of the preceding Claims, characterised in that discontinuities, defined by projecting walls (8), are provided close to the flying edge.

5. A deflector according to Claim 4, characterised in that the walls (8) extend at a distance from the edge (9) of the deflector and are connected to the said edge (9) at each of their ends.

6. A deflector according to Claim 5, characterised in that openings (11) are provided between the walls (8) and the edge (9).

7. A windscreen wiper blade, characterised by the fact that it includes a deflector according to one of Claims 1 to 6.

Fig 1

Fig 2

Fig 3

Fig 4

Fig 5

Fig 6

EP 0 287 464 B1

Fig 7

Fig 8

Fig 9

Fig 10